# FASCICULE DE BREVET EUROPEEN

(11) **EP 2 158 720 B1**
(45) Date de publication et mention de la délivrance du brevet: **28.11.2018**
(21) Numéro de dépôt: 08826834.7
(22) Date de dépôt: 20.06.2008
(51) Int. Cl.: H04L 9/30

(54) **PROCÉDÉ D'AUTHENTIFICATION UTILISANT UN DÉCODAGE DE CODE CORRECTEUR D'ERREURS À PARTIR D'UNE MATRICE PUBLIQUE**
AUTHENTIFIZIERUNGSVERFAHREN MITHILFE DER DEKODIERUNG EINES FEHLERKORREKTURCODES AUF BASIS EINER ÖFFENTLICHEN MATRIX
METHOD OF AUTHENTICATION USING A DECODING OF AN ERROR CORRECTING CODE ON THE BASIS OF A PUBLIC MATRIX

(30) Priorité: 22.06.2007 FR 0704518
(43) Date de publication de la demande: 03.03.2010
(73) Titulaire: Centre National de la Recherche Scientifique (C.N.R.S.), 75794 Paris Cedex 16 (FR)
(72) Inventeur: GABORIT, Philippe, F-87220 Feytiat (FR)
(74) Mandataire: Lavoix
(86) Numéro de dépôt international: PCT/FR2008/000871
(87) Numéro de publication internationale: WO 2009/016272

(56) Documents cités:
- PH. GABORIT, C. LAUDAROUX, N. SENDRIER: "SYND: a Very Fast Code-Based Cipher Stream with a Security Reduction." PROCEEDINGS OF THE 2007 IEEE INTERNATIONAL SYMPOSIUM ON INFORMATION THEORY,, [Online] 2006, pages 186-190, XP002469503 Nice Extrait de l'Internet: URL:http://www.unilim.fr/pages_perso/phili ppe.gaborit/isit_synd_rev.pdf> [extrait le 2008-02-12]
- MYUNG S ET AL: "Quasi-cyclic LDPC codes for fast encoding" IEEE TRANSACTIONS ON INFORMATION THEORY, IEEE SERVICE CENTER, PISCATAWAY, NJ, US, vol. 51, no. 8, août 2005 (2005-08), pages 2894-2901, XP002438608 ISSN: 0018-9448
- TANNER R M ET AL: "LDPC block and convolutional codes based on circulant matrices" IEEE TRANSACTIONS ON INFORMATION THEORY, IEEE SERVICE CENTER, PISCATAWAY, NJ, US, vol. 50, no. 12, décembre 2004 (2004-12), pages 2966-2984, XP002368048 ISSN: 0018-9448
- PHILIPPE GABORIT: "Shorter keys for code-based cryptography", LACO LIMOGE, 8 September 2004 (2004-09-08), pages 81-90, XP055336266,
- PHILIPPE GABORIT ET AL: "SYND: a Fast Code-Based Stream Cipher with a Security Reduction", INFORMATION THEORY, 2007. ISIT 2007. IEEE INTERNATIONAL SYMPOSIUM ON, IEEE, PISCATAWAY, NJ, USA, 24 June 2007 (2007-06-24), pages 186-190, XP031440716, ISBN: 978-1-4244-1397-3
- NICOLAS T COURTOIS ET AL: "How to Achieve a McEliece-Based Digital Signature Scheme", ADVANCES IN CRYPTOLOGY ? ASIACRYPT 2001; 7TH INTERNATIONAL CONFERENCE ON THE THEORY AND APPLICATION OF CRYPTOLOGY AND INFORMATION SECURITY GOLD COAST, AUSTRALIA, DECEMBER 9?13, 2001 PROCEEDINGS (BOOK SERIES: LECTURE NOTES IN COMPUTER SCIENCE), SPRING, vol. 2248, 9 December 2001 (2001-12-09), pages 157-174, XP007910981, DOI: 10.1007/3-540-45682-1_10 ISBN: 978-3-540-42987-6 [retrieved on 2001-01-01]

## Description

L'invention se rapporte à un procédé cryptographique d'authentification utilisant un décodage de code correcteur d'erreurs à partir d'une matrice publique.

L'invention se rapporte également à un dispositif cryptographique comprenant des moyens de calcul agencés pour mettre en oeuvre, à l'exécution, un tel procédé d'authentification.

On connaît des procédés cryptographiques d'authentification.

Le procédé cryptographique d'authentification le plus répandu est actuellement basé sur l'algorithme RSA, de River, Shamir et Adleman, dont la sécurité réside dans la difficulté mathématique pour factoriser de grands nombres entiers.

Toutefois, un tel procédé cryptographique d'authentification présente plusieurs inconvénients. En particulier, dans l'algorithme RSA, il est nécessaire de procéder à des calculs sur des entiers très grands, et notamment des calculs d'exponentielles discrètes. De tels calculs peuvent être lents, tout particulièrement lorsqu'ils sont implémentés sur des dispositifs cryptographiques à bas coût possédant des capacités de calcul limité, notamment des cartes à puce ou des étiquettes radio fréquence. Dès lors, les procédés cryptographiques d'authentification ne sont pas actuellement disponibles sur de tels dispositifs cryptographiques.

Parmi les alternatives aux procédés cryptographiques d'authentification basés sur l'algorithme RSA, on connaît les procédés cryptographiques d'authentification utilisant un décodage de code correcteur d'erreurs utilisant une matrice publique.

L'invention se rapporte plus particulièrement à un tel procédé.

Ces procédés ont l'avantage d'être la source de problèmes mathématiques NP-complets donc très difficiles à résoudre. Dès lors, ces procédés sont très sécurisés. En outre, les calculs de décodage de codes correcteurs d'erreur sont plus rapides que les calculs basés sur l'algorithme RSA.

L'utilisation des codes correcteurs d'erreurs en cryptographie est bien connue et date des années 1980.

La demande EP-A-0661846 décrit un tel procédé cryptographique d'authentification utilisant un décodage de code correcteur d'erreurs à partir d'une matrice publique.

Cette demande, ainsi que la publication du demandeur de cette demande, « A new identification scheme based on syndrome decoding », J. Stern 1993, décrivent un protocole d'authentification dit protocole par syndrome de Stern, utilisant une matrice publique aléatoire de très grande taille, typiquement de l'ordre de cent à mille kilobits.

De même, la publication « Improved Identification schemes based on error-correcting codes », Veron, Applicable Alegbra in Engineering, Communication and Computing, 1997, décrit une variante du protocole par syndrome, toujours dans le cadre d'un procédé cryptographique d'authentification utilisant un décodage de code correcteur d'erreurs à partir d'une matrice publique. Ce protocole est appelé protocole de Veron.

Dans ces protocoles d'authentification, la matrice publique est le plus souvent aléatoire, et il est donc nécessaire de stocker l'ensemble des coefficients de la matrice dans une mémoire du dispositif cryptographique implémentant le protocole.

Toutefois, les contraintes de stockage des dispositifs cryptographiques à bas coûts ne permettent pas d'implémenter un tel protocole. C'est notamment le cas dans une carte à puce ou une étiquette radio fréquence.

Dans le document « A new identification scheme based on syndrome decoding », J. Stern 1993, il est également proposé de générer la matrice publique de façon pseudo-aléatoire à partir d'une valeur initiale, et d'un générateur pseudo-aléatoire. Toutefois, la spécification d'un générateur pseudo-aléatoire est un problème qui reste actuellement non résolu. En outre, l'implémentation d'un tel générateur pseudo-aléatoire pourrait être incompatible avec les capacités limitées d'un dispositif cryptographique à bas coût.

Le document « SYND : a very fast Code-Based Cipher Stream with a security reduction » de Gaborit et al., a été présenté au cours de la conférence ISIT 2007, qui s'est tenue à partir du 24 juin 2007 et il n'était pas accessible au public avant cette date.

Le document Gaborit Ph., « Shorter Keys for code based cryptography », 8 septembre 2004, p. 81-90 décrit l'utilisation de matrice quasi-cyclique pour des cryptosystèmes selon les schémas de McEliese ou de Niederreiter.

Ce schéma de McEliese est discuté dans ses aspects de sécurité ainsi que dans la faisabilité pour établir une signature cryptographique dans le papier Nicolas Courtois et al, « How to achieve a McEliese-based digital signature scheme ».

Un but de l'invention est de fournir un procédé cryptographique d'authentification utilisant un décodage de code correcteur d'erreurs à partir d'une matrice publique qui puisse être implémenté dans un dispositif cryptographique à bas coût, ayant notamment des capacités de calcul et/ou de stockage limitées.

En particulier, un but de l'invention est de réduire la quantité de données publiques à stocker dans un procédé cryptographique d'authentification utilisant un décodage de code correcteur d'erreurs à partir d'une matrice publique.

En outre, les matrices aléatoires utilisées dans les documents susmentionnés sont mal adaptées à des calculs rapides dans un dispositif cryptographique.

Un autre but de l'invention est de fournir un procédé cryptographique d'authentification utilisant un décodage de code correcteur d'erreurs à partir d'une matrice publique permettant des calculs rapides.

Pour atteindre ces buts, dans le cadre de l'invention, un nouveau type de matrice publique est proposé.

En particulier, ces buts sont atteints selon l'invention grâce au fait que la matrice publique est une matrice quasi-cyclique.

Il est connu qu'une matrice quasi-cyclique est une matrice comprenant une juxtaposition de blocs circulants, dans lesquels on passe d'une ligne à une autre par une permutation circulaire.

Dès lors, pour stocker l'ensemble de l'information sur la matrice publique, il suffit de stocker une ligne de base de chaque bloc circulant, le reste du bloc circulant se déduisant de cette ligne de base par une permutation. La quantité de données à stocker dans le procédé d'authentification est donc considérablement réduite.

En outre, les multiplications d'un vecteur par une matrice quasi-cyclique sont rapides, grâce aux propriétés des blocs circulants. Or, le procédé cryptographique d'authentification utilisant un décodage de code correcteur d'erreurs met en oeuvre de telles multiplications. Il en résulte que le procédé selon l'invention permet d'améliorer la rapidité des calculs cryptographiques.

Le procédé d'authentification selon l'invention peut donc être facilement implémenté dans un dispositif cryptographique, et ce même si ce dispositif cryptographique comprend des capacités de stockage et de calcul limités.

Le procédé d'authentification selon l'invention a également l'avantage de fournir une matrice publique susceptible d'être compatible avec les protocoles décrits dans les publications mentionnées ci-dessus, c'est-à-dire les protocoles de décodage par syndrome de Stern, et le protocole dual du décodage par syndrome de Stern, décrit par Veron.

La matrice publique est construite à partir d'une matrice intermédiaire quasi-cyclique comprenant k lignes et 2k colonnes, la matrice intermédiaire étant composée d'une juxtaposition d'un premier bloc carrée circulant de taille k, et d'un deuxième bloc carrée circulant de taille k, la matrice intermédiaire étant de la forme G'=[A | B], la matrice publique étant construite en multipliant à gauche la matrice intermédiaire par la matrice inverse du bloc A, de sorte que la matrice publique est de la forme G=[I| A⁻¹.B], la matrice A⁻¹ étant la matrice inverse du bloc A.

Le premier bloc circulant et le deuxième bloc circulant sont définis respectivement par un premier vecteur et un deuxième vecteur, le vecteur formé par le premier vecteur et le deuxième vecteur étant de poids faible.
Le premier vecteur et le deuxième vecteur peuvent être aléatoires avec cette contrainte de poids.

La matrice publique peut tout particulièrement être utilisée en tant que matrice publique dans un protocole de Veron.

Dans ce cas, le secret du protocole de Veron est constitué par le vecteur colonne transposé du vecteur ligne formé par le premier vecteur et le deuxième vecteur.

Ce vecteur correspond à une clé privée de taille 2k. Les données publiques peuvent alors être déterminées à partir des blocs circulants induits par la clé privée pour une taille k. Un protocole de décodage peut alors être mis en oeuvre à partir de 3k bits.

L'invention se rapporte également à un programme d'ordinateur comprenant des instructions agencées de sorte à mettre en oeuvre, à l'exécution, le procédé d'authentification tel que précédemment décrit. L'invention se rapporte également à un dispositif cryptographique comprenant des moyens de calcul agencés pour mettre en oeuvre le procédé d'authentification tel que précédemment décrit.

L'invention se rapporte également à une carte à puce comprenant un tel dispositif cryptographique.

On décrit maintenant des modes de réalisation de l'invention en référence aux figures annexées dans lesquelles :
FIG. 1 représente de façon générale une matrice quasi-cyclique ;
FIG. 2 représente une matrice publique à utiliser dans un procédé d'authentification selon un exemple illustratif
FIG. 3 représente un exemple de bloc matriciel composant la matrice illustrée à la FIG. 2 ;
FIG. 4 représente une matrice intermédiaire des mots de petit poids utilisée pour construire la matrice publique à utiliser dans un procédé d'authentification selon un mode de réalisation de l'invention ;
FIG. 5 représente un exemple de bloc matriciel composant la matrice intermédiaire illustrée à la FIG. 4.

Le procédé cryptographique d'authentification utilisant un décodage de code correcteur d'erreurs à partir d'une matrice publique est susceptible d'être mis en oeuvre à l'aide du protocole de décodage par syndrome de Stern.

Ce protocole est entièrement décrit dans la demande de brevet EP-A-0661846 et dans la publication susmentionnée « A new identification scheme based on syndrome decoding », J. Stern 1993. Il est également bien connu de l'homme du métier dans le domaine de la cryptographie par code correcteur d'erreurs.

Pour l'implémentation de ce protocole, on se rapportera à ces documents.

On rappelle ci-dessous les principales étapes du protocole de Stern. Dans le décodage par syndrome de Stern, deux entités détiennent une matrice publique H constituée d'éléments binaires. La clé privée est alors un mot de poids faible, et la clé publique est le produit de la matrice publique par ce mot.

Pour réaliser l'authentification, avec le protocole de Stern, on considère une entité P, le prouveur, qui veut s'authentifier auprès d'un vérifieur V. On effectue une répétition de tours, dont chaque exécution correcte augmente la probabilité de véracité de l'identité de P. Chaque tour est composé d'une première étape où le prouveur P envoie un engagement au vérificateur V, qui renvoie alors dans une deuxième étape un défi à P. Dans une troisième étape, le prouveur P renvoie une réponse au vérificateur V, qui vérifie que la réponse du prouveur P est en accord avec sa clé publique.

Le lien entre la clé publique de P et sa clé secrète est basé sur le problème du décodage par syndrome. Le détail calculatoire des opérations du protocole de Stern précité est bien connu de l'homme du métier, qui pourra éventuellement se rapporter à l'article précité.

De la même façon, l'homme du métier connaît le protocole de Veron et pourra éventuellement se référer au document « Improved Identification schemes based on error-correcting codes », Veron, Applicable Alegbra in Engineering, Communication and Computing, 1997, pour l'implémentation du protocole de Veron.

On rappelle ci-dessous les principales étapes du protocole de Veron
Pour réaliser l'authentification avec le protocole de Veron, les grandes étapes sont les mêmes que pour le protocole de Stern, la différence se situant au niveau des calculs effectués à chaque étape qui sont un peu différents. En particulier le lien entre la clé publique et la clé privée est basé sur le fait de trouver un mot de faible poids associé à une certaine matrice ou code correcteur d'erreurs.

Dans ces documents, une matrice publique est décrite. Selon l'invention, le protocole est mis en oeuvre comme dans les documents précités en remplaçant la matrice publique décrite dans ces documents par les matrices publiques décrites ci-dessous. Le type de matrice publique susceptible d'être utilisé dans chacun des protocoles mentionnés ci-dessus est décrit ci-dessous.

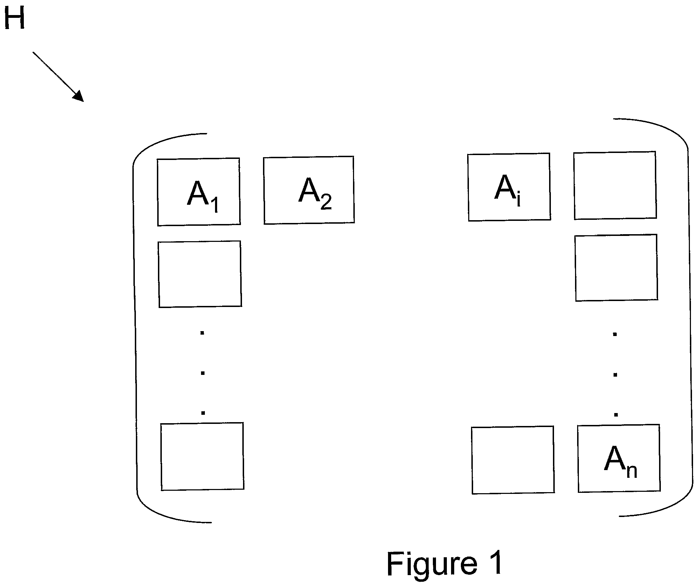

En particulier, la matrice H décrite dans l'exemple ci-dessous peut être utilisée indifféremment en tant que matrice publique dans le protocole de Stern ou de Veron, et la matrice G décrite dans le mode de réalisation peut être utilisé dans le protocole de Veron. Selon un exemple illustratif non couvert par l'invention, la matrice publique est une matrice quasi-cyclique, c'est-à-dire composée d'une juxtaposition de blocs circulants. La FIG. 1 représente de façon générale une telle matrice H quasi-cyclique, composée de blocs carrés circulants A₁, A₂, ..., Aₙ. Chacun des blocs est défini par un vecteur de base, et le reste du bloc circulant est déterminé à partir du vecteur de base par des permutations.

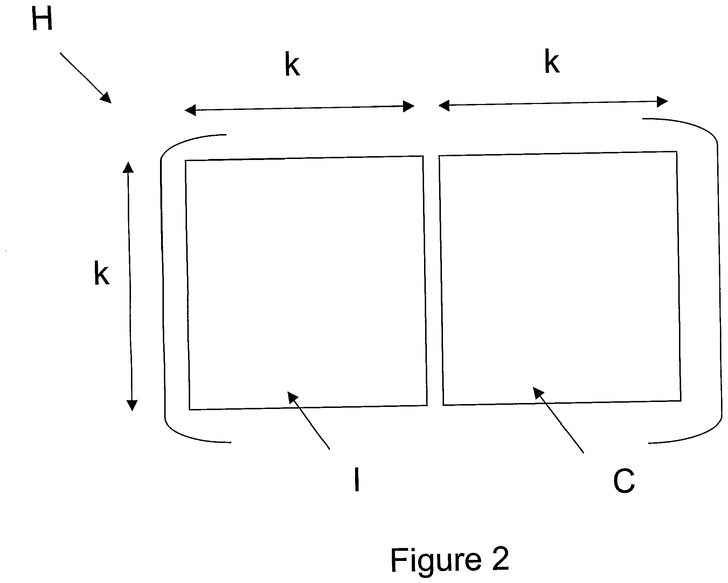

Illustré FIG. 2, selon un exemple illustratif non couvert par l'invention, la matrice publique H est du type de la matrice décrite ci-dessus en référence à la FIG. 1 et comprend k lignes et 2k colonnes. Elle est composée d'une matrice identité I carrée de taille k, et d'une matrice circulante C carrée de taille k composée de 0 et de 1. La matrice H est donc de la forme H=[I | C].

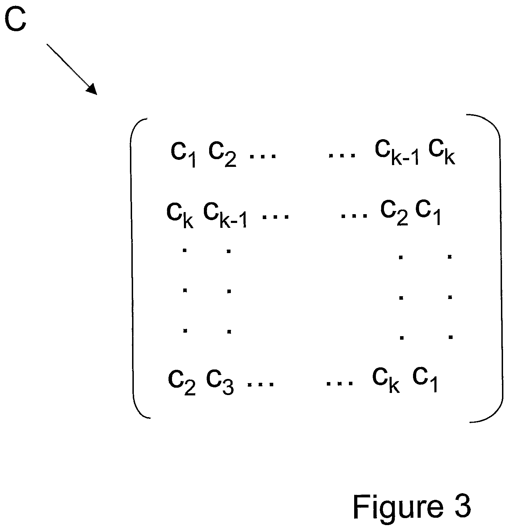

La matrice circulante C est décrite plus en détail sur la FIG. 3. Elle comprend une première ligne consistant en un vecteur aléatoire [ci, c₂, ..., cₖ₋₁, cₖ], les cᵢ valant 0 ou 1. Les lignes suivantes sont déterminées par permutations successives de la première ligne, de sorte que la matrice C est entièrement déterminée par sa première ligne.

Cette matrice publique H peut être utilisée en tant que matrice publique dans les protocoles de Stern et de Veron mentionnés plus haut.

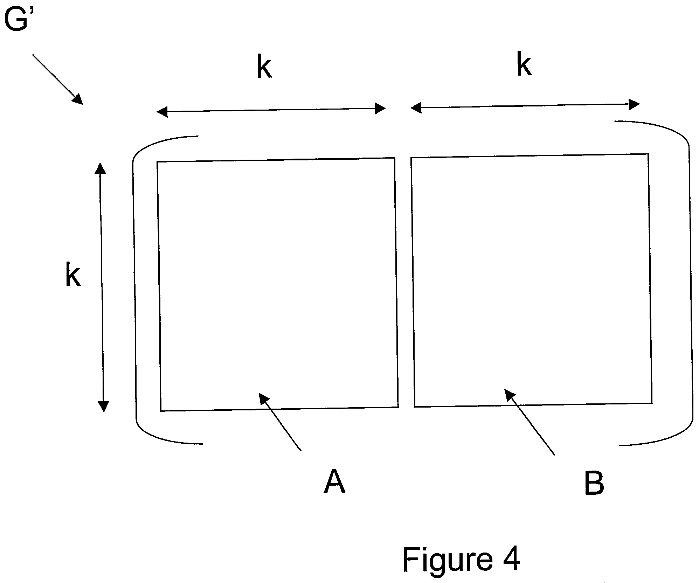

Selon un mode de réalisation, on définit une matrice intermédiaire G' quasi-cyclique comprenant k lignes et 2k colonnes. Elle est composée d'une première matrice carrée circulante A de taille k, et d'une deuxième matrice carrée circulante B de taille k. Cette matrice intermédiaire G' est illustrée FIG. 4. La matrice G' est donc de la forme G'=[A | B]. On construit alors la matrice publique G=[I | A⁻¹.B], composée d'un premier bloc identité et d'un deuxième bloc correspondant à la multiplication à gauche de la matrice B par la matrice inverse de A, notée A⁻¹. Dans la suite, on note D la matrice égale au produit A⁻¹.B.

La matrice G telle que décrite ci-dessus est utilisée en tant que matrice publique dans le protocole de Veron.

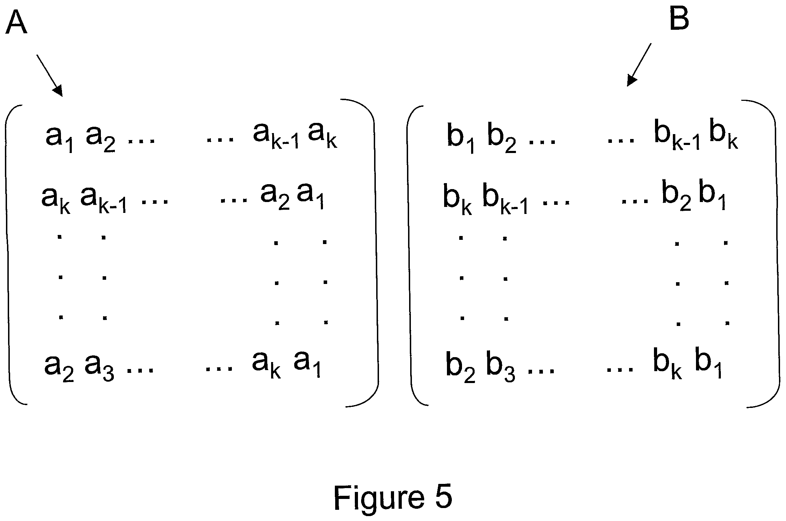

Les matrices A et B sont illustrées FIG. 5 et sont définies respectivement à partir de leur première ligne respective a=[a₁, a₂, ..., aₖ₋₁, ak] et b=[b₁, b₂, ..., bₖ₋₁, bk], les aᵢ et bᵢ valant 0 ou 1. Ces deux premières lignes sont des vecteurs aléatoires et sont choisies de sorte que le vecteur [a,b] satisfasse la condition de poids dans le protocole de Veron.

Dans ce cas, la donnée privée dans le protocole de Veron est le vecteur ^{t}[a,b] de taille 2k, c'est-à-dire le vecteur colonne transposé du vecteur ligne [a,b], et la donnée publique est le vecteur décrivant la matrice D de taille k, c'est-à-dire la première ligne de la matrice D.

L'avantage de ce mode de réalisation est que la donnée secrète ^{t}[a,b] de poids faible est directement décrite dans la matrice publique.

L'utilisation des matrices décrites ci-dessus dans un protocole de Veron ou de Stern pour l'exemple illustratif, et tout particulièrement dans le protocole de Veron dans le mode de réalisation, permet de maintenir les contraintes de sécurité imposées pour les protocoles cryptographiques.

En particulier, il est connu qu'un code est sécurisé pour les attaques usuelles lorsque ses paramètres sous en dessous de la limite de Gilbert-Varshanov.

Dans l'exemple illustratif, pour un secret X de poids w, si le poids w est choisi juste en dessous de la limite de Gilbert-Varshanov, on choisit k de sorte que le coût pour trouver un mot X de poids w dans un code de paramètres [2k, k] est au moins 2⁸⁰.

Un exemple de paramètres respectant ces conditions pour la matrice quasi-cyclique du premier mode de réalisation est k=317, w=69, ce qui fournit une donnée publique de taille 634 correspondant à un syndrome s, et une donnée privée de taille 951 correspondant au secret de taille 2k, et à la première ligne de la matrice C. Dans ce cas, la matrice H est telle que HX=s, s étant le syndrome, X étant la clé secrète, et H la matrice publique.

Dans le mode de réalisation, on choisit le vecteur x = [a,b] de poids w inférieur à la limite de Gilbert-Varshanov, et par exemple k=347, w=76, fournissant une donnée privée ^{t}x = ^{t}[a,b] de taille 694 bits, et une donnée publique, définie par la première ligne de la matrice D, de taille 347 bits.

Ainsi, l'utilisation des matrices quasi-cycliques selon l'invention permet de diminuer la taille des matrices par rapport aux tailles usuelles dans protocole de Veron, typiquement de plusieurs centaines de kilobits à environ 300 bits.

Le procédé cryptographique d'authentification utilisant un décodage de code correcteur d'erreurs à partir d'une matrice quasi-cyclique selon l'invention peut être facilement implémenté dans un dispositif cryptographique, pour le protocole de Veron.

En particulier, la matrice G décrite dans le mode de réalisation peut être utilisé dans le protocole de Veron.

Pour ce faire, on programme un processeur de sorte à implémenter les protocoles susmentionnés avec la ou les matrices quasi-cycliques décrites ci-dessus. Le dispositif cryptographique comprend également des mémoires pour stocker les données lors des calculs cryptographiques.

Grâce au fait que le procédé selon l'invention permet de diminuer la taille des matrices utilisées dans le décodage de codes correcteurs d'erreurs, tel dispositif cryptographique peut par exemple être la puce d'une carte à puce.

## Revendications

1. Procédé cryptographique d'authentification utilisant un décodage de code correcteur d'erreurs à partir d'une matrice publique quasi-cyclique utilisée en tant que matrice publique dans un protocole de Véron, **caractérisé en ce que** la matrice publique est construite à partir d'une matrice intermédiaire (G') quasi-cyclique comprenant k lignes et 2k colonnes, la matrice intermédiaire (G') étant composée d'une juxtaposition d'un premier bloc carré circulant A de taille
k, et d'un deuxième bloc carré circulant B de taille k, la matrice
intermédiaire étant de la forme G'=[A | B], la matrice publique étant construite en multipliant à gauche la matrice intermédiaire par la matrice inverse du bloc A, de sorte que la matrice publique est de la forme G=[I| A⁻¹.B], la matrice A⁻¹ étant la matrice inverse du bloc A.

2. Procédé selon la revendication 1, dans lequel le premier bloc circulant et le deuxième bloc circulant sont définis respectivement par un premier vecteur et un deuxième vecteur, le vecteur formé par le premier vecteur et le deuxième vecteur étant de poids faible.

3. Procédé selon la revendication 2, dans lequel le premier vecteur et le deuxième vecteur sont aléatoires.

4. Procédé selon la revendication 1, dans lequel, le
secret du protocole de Veron est constitué par le vecteur colonne transposé du vecteur ligne formé par le premier vecteur et le deuxième vecteur.

5. Programme d'ordinateur comprenant une pluralité
d'instructions pour la mise en oeuvre, à l'exécution, du procédé selon l'une des revendications 1 à 4.

6. Dispositif cryptographique comprenant des moyens de calcul agencés pour mettre en oeuvre le procédé selon l'une des revendications 1 à 4.

7. Carte à puce comprenant un dispositif cryptographique selon la revendication 6.

## Patentansprüche

1. Kryptographisches Authentifizierungsverfahren unter Verwendung einer Fehlerkorrekturdekodierung aus einer nahezu zyklischen öffentlichen Matrix, die als öffentliche Matrix in einem Veron-Protokoll verwendet wird,
**dadurch gekennzeichnet, dass** die öffentliche Matrix konstruiert wird aus einer nahezu zyklischen Zwischenmatrix (G'), die k Zeilen und 2k Kolonnen umfasst, wobei die Zwischenmatrix (G') zusammengesetzt ist aus einer Nebeneinanderstellung eines ersten zirkulierenden quadratischen Blocks A der Größe k und eines zweiten zirkulierenden quadratischen Blocks B der Größe k, wobei die Zwischenmatrix die Form G'=[A | B] hat, wobei die öffentliche Matrix konstruiert wird durch Linksmultiplikation der Zwischenmatrix mit der inversen Matrix des Blocks A, dergestalt, dass die öffentliche Matrix die Form G=[I| A⁻¹.B] hat, wobei die Matrix A⁻¹ die inverse Matrix des Blocks A ist.

2. Verfahren nach Anspruch 1, in welchem der erste zirkulierende Block und der zweite zirkulierende Block jeweils durch einen ersten Vektor und einen zweiten Vektor gebildet werden, wobei der durch den ersten Vektor geformte Vektor und der zweite Vektor niedrigstwertig sind.

3. Verfahren nach Anspruch 2, in welchem der erste Vektor und der zweite Vektor zufällig sind.

4. Verfahren nach Anspruch 1, in welchem das Geheimnis des Veron-Protokolls gebildet wird durch den transponierten Kolonnenvektor des Zeilenvektors, der durch den ersten Vektor und den zweiten Vektor geformt wird.

5. Computerprogramm, umfassend eine Vielzahl von Anweisungen für die Umsetzung, bei der Ausführung, des Verfahrens nach einem der Ansprüche 1 bis 4.

6. Kryptographische Vorrichtung, die angeordnete Mittel zur Berechnung umfasst, um das Verfahren nach einem der Ansprüche 1 bis 4 umzusetzen.

7. Speicherkarte, die eine kryptographische Vorrichtung nach Anspruch 6 umfasst.

## Claims

1. Cryptographic authentication method using decoding by error-correcting code from a quasi-cyclic public matrix used as public matrix in a Véron protocol,
**characterised in that** the public matrix is constructed from a quasi-cyclic intermediate matrix (G') comprising k lines and 2k columns, the intermediate matrix (G') being composed of a juxtaposition of a first circulating square block A of size k and of a second circulating square block B of size k, the intermediate matrix having the form G' = [A | B], the public matrix being constructed by multiplying on the left the intermediate matrix by the inverse matrix of the block A, so that the public matrix has the form G' = [I| A⁻¹.B], the matrix A⁻¹ being the inverse matrix of the block A.

2. Method according to claim 1, in which the first circulating block and the second circulating block are defined respectively by a first vector and a second vector, the vector formed by the first vector and the second vector being of low weighting.

3. Method according to claim 2, in which the first vector and the second vector are random.

4. Method according to claim 1, in which the secret of the Veron protocol is formed by the transposed column vector of the line vector formed by the first vector and the second vector.

5. Computer programme comprising a plurality of instructions for implementation, until execution, of the method according to one of the claims 1 to 4.

6. Cryptographic device comprising calculation means provided for implementing the method according to one of the claims 1 to 4.

7. Chip card comprising a cryptographic device according to claim 6.
